(19) Europäisches Patentamt
European Patent Office
Office européen des brevets

(11) Publication number: **0 167 321**
**B1**

(12) **EUROPEAN PATENT SPECIFICATION**

(45) Date of publication of patent specification: **23.08.89**

(51) Int. Cl.$^4$: **H 01 M 4/60,** G 02 F 1/17, H 01 B 1/12, C 08 G 61/02

(21) Application number: **85304304.0**

(22) Date of filing: **17.06.85**

(54) **Reversible electrochemical cell using conjugated polymer as electrode-active material.**

(30) Priority: **15.06.84 JP 124347/84**

(43) Date of publication of application:
**08.01.86 Bulletin 86/02**

(45) Publication of the grant of the patent:
**23.08.89 Bulletin 89/34**

(84) Designated Contracting States:
**DE FR GB**

(56) References cited:
**EP-A-0 036 118**
**DE-A-2 947 796**
**US-A-3 706 677**
**US-A-4 321 114**

**PATENTS ABSTRACTS OF JAPAN, vol. 7, no. 233 (E-204)1378r, 15th October 1983**

**CHEMICAL ABSTRACTS, vol. 102, 1985, p. 644, no. 230366, Columbus, Ohio (US)**

(73) Proprietor: **SUMITOMO CHEMICAL COMPANY, LIMITED**
**Kitahama 4-chome 5-33**
**Chuo-ku Osaka 541 (JP)**

(72) Inventor: **Taguchi, Satoshi**
**19-10-204, Shinashiyakami**
**Suita-shi (JP)**

(74) Representative: **Ruffles, Graham Keith et al**
**MARKS & CLERK 57-60 Lincoln's Inn Fields**
**London WC2A 3LS (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 167 321 B1

## Description

This invention relates to a reversible electrochemical cell using a conjugated polymer as electrode-active material. More particularly it relates to a reversible electrochemical cell using as electrode-active material a conjugated polymer obtained from a polymer intermediate.

Generally, conjugated polymers, if not treated specifically, are either insulating or semiconducting materials, and lack high electrical conductivity. Recently, however, the discovery of metallic electrical conductivity in doped polyacetylene films has given a momentum to more enthusiastic attempts to improve the electrical conductivity of various kinds of conjugated polymeric compounds. Such efforts employ doping with and have led to the development of electrochemical doping techniques. Coincidentally with this development, it was found (US Patent 4,321,114) that a rechargeable battery can be constructed using as electrode-active material a polymer film [e.g. of a poly-(*P*-phenylenevinylene)] electrochemically doped with electrolyte ions.

It has also been found that polypyrrole or polythiophene obtained from electrochemical oxidative polymerization not only possesses a high electrical conductivity but also exhibits reversible electrochromism when undergoing doping and undoping with electrolyte ions.

Thus, these conjugated polymers, when used as electrode-active material, can be electrochemically doped with electrolyte ions and can be used as working electrodes for battery cells or electrochromic displays.

The electrodes used for such purposes have however to assume greatly diversified shapes and sizes depending on the intended use. Thus, a polymeric electrode-active material that can be worked into any desired shape and size has been desired.

The already developed materials such as polyacetylene and polypyrrole are insoluble and infusible, so that it is difficult to shape such a polymer into an electrode structure having a large area and a desired form, such as a thin film. Hence in practice these polymers are still unsatisfactory for use as an electrode-active material for cells, and further improvement has been desired. Studies have been made to this end by many researchers, and the use of a variety of conjugatd polymers such as poly-para-phenylene has been proposed. However, such polymers are usually insoluble and infusible, and pose difficulties in shaping into a desired electrode configuration such as a thin film. A process wherein such a polymer is formed from a shaped soluble polymer containing a sulphonium side group by elimination of the side group to leave a double bond is known from US—A—3706677.

Basically, in accordance with the present invention a polymer which can be shaped into a desired form and which can serve as an electrode-active material for cells is produced via a polymeric sulphonium salt which can be worked into any desired form. An electrochemical cell is constructed by using the resultant polyphenylene vinylene polymer as electrode-active material in combination with an electrolyte. By forming proper circuit components and conducting doping and undoping reversibly and by optionally further applying this phenomenon, the resultant electrochemical cell can be used as a secondary battery cell or electrochromic display element.

According to one embodiment of the invention, therefore, there is provided a process of fabricating an electrochromic display element comprising a reversible electrochemical cell having as electrode-active material, serving as colour former, a polyphenylene vinylene polymer comprising a conjugated polymeric structure of the formula:

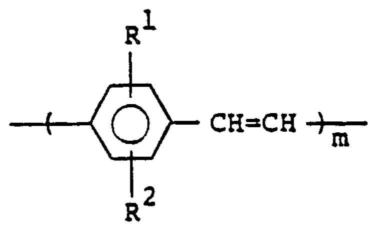

(wherein $R^1$ and $R^2$ represent independently hydrogen, an alkyl group or an alkoxy group, and *m* is an integer of 2 or more); which process comprises first forming into a desired shape a polymeric sulphonium salt having the structure represented by the general formula:

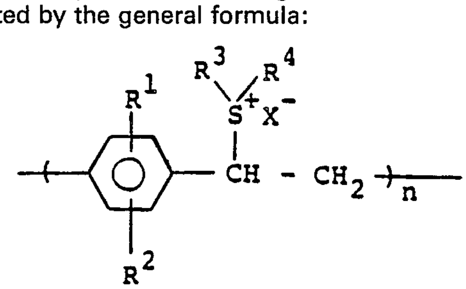

(II)

(wherein $R^1$ and $R^2$ are as defined above, $R^3$ and $R^4$ represent independently a hydrocarbon group having 1 to 20 carbon atoms, X is a counter ion, and *n* is defined by the relationship $n \geq m \geq 2$); subjecting the

shaped polymeric sulphonium salt to decomposition treatment in an inert atmosphere to form the polyphenylene vinylene polymer; and placing the electrode-active material in the cell together with an electrolyte.

The invention also provides a process of fabricating a reversible electrochemical cell using as electrode-active material a polyphenylene vinylene polymer comprising a conjugated structure of the formula:

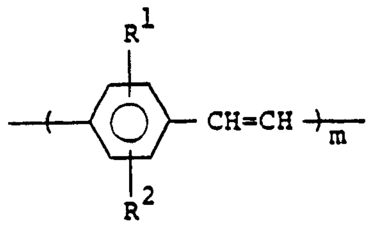

(wherein $R^1$ represents hydrogen or an alkoxy group, $R^2$ represents an alkoxy group, and *m* is an integer of 2 or more); which process comprises first forming, into a desired shape, a polymeric sulphonium salt having the structure represented by the general formula:

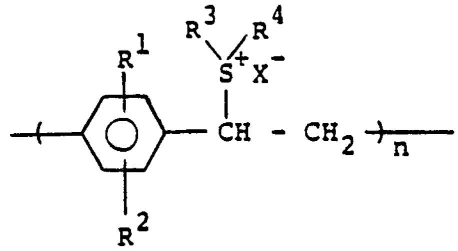

(II)

(wherein $R^1$ and $R^2$ are as defined above, $R^3$ and $R^4$ represent independently a hydrocarbon group having 1 to 20 carbon atoms, X is a counter ion, and *n* is defined by the relationship $n \geq m \geq 2$); subjecting the shaped polymeric sulphonium salt to a decomposition treatment in an inert atmosphere to form the polyphenylene vinylene polymer; and placing the electrode-active material in a cell together with an electrolyte.

The conjugated polymer structure obtained from a shapable polymeric intermediate employed for the purpose of fabricating an electrochromic display element according to this invention is preferably a polyphenylene vinylene polymer with p-phenylene vinylene, 2,5-dialkyl-p-phenylene vinylene or 2,5-dialkoxy-p-phenylene vinylene as main structural units. When employed to fabricate a reversible electrochemical cell the phenylene ring has one or two alkoxy substituents. Poly-2,5-dialkoxy-p-phenylene vinylene is especially preferred for its excellent stability.

$R^3$ and $R^4$ in the formula (II) conveniently represent a hydrocarbon group having 1 to 20 carbon atoms, such as an alkyl group, aryl group, cycloalkyl group or aralkyl group. Examples include a methyl, ethyl, propyl, isopropyl, n-butyl, 2-ethylhexyl, dodecyl, octadecyl, phenyl, cyclohexyl, benzyl or the like group. Groups having 1 to 6 carbon atoms, especially methyl and ethyl groups, are preferred.

The counter ion X of the sulphonium salt of formula (II) may be selected from various types in the usual way and may bear more than the single charge shown in the formula. For the purpose of this invention, it is convenient to use for X a halide ion, hydroxide ion, boron tetrafluoride ion, perchlorate ion or the like ion. More especially, a halide ion, such as a chloride, bromide or iodide ion, or a hydroxide ion is preferred.

The polymeric sulphonium salt used in this invention may be one prepared by condensation polymerization of a disulphonium salt with an alkali in water or an organic solvent soluble in water, for example, a mixed solvent of alcohols. It is also possible to use a polymeric sulphonium salt prepared by likewise conducting the condensation copolymerization with an alkali in the presence of a different disulphonium salt.

A suitable non-limiting example of a synthetic route for the polymeric sulphonium salts proceeds through a disulphonium salt $RRS^+—CH_2—Ar—CH_2—RRS^+$, where R is a hydrocarbon group and Ar is phenylene substituted with $R^1$ and $R^2$.

For preparing an electrode-active material of use in this invention, it is desirable that the polymeric sulphonium salt has a sufficiently large molecular weight, with *n* being at least 2, preferably 5 or more. For example, a polymeric sulphonium salt having a molecular weight that defies dialysis by a dialysis membrane with a molecular weight fraction of 3,500 can be particularly effective.

A characteristic feature of this invention is that a product of any desired shape can be made from the polymeric intermediate such as a polymeric sulphonium salt, especially from a solution thereof.

Any appropriate method such as casting, spinning, etc. can be used for shaping the polymeric intermediate to lead to a shaped article for the polymeric electrode-active material having a desired configuration. The form of electrode-active material is thus generally not subject to particular restrictions. For instance, the electrode-active material may be in the form of a film, filament, fabric, etc. Further, it may be a composite shaped article obtained for example by applying the polymeric sulphonium salt to a substrate

and then subjecting it to the sulphonium decomposition treatment. For example, the polymeric sulphonium salt can be screen printed, cast or otherwise applied to a substrate such as a web, porous base, film, fabric, etc. The shaped article of polymeric electrode-active material may be orientated in an appropriate way, such as by drawing. The orientated article may then be given high electrical conductivity by doping and thus be suited for application in a secondary battery, etc. Thus, a substrate which is film-like or filamentous and easy to draw gives a good result in such application. On the other hand, a thin filmy form is preferred for the working electrodes to be used for electrochromic display elements. In particular, a screen printed article is desirable as it permits a suitable pattern to be worked in.

Treatment of the sulphonium salt to give the polyphenylene vinylene polymer can be accomplished under various decomposition conditions such as heating, application of light, ultraviolet irradiation, treatment with a strong base, etc. Heating is especially preferred.

In the process, it is important that such decomposition treatment of the sulphonium salt be conducted in an inert atmosphere, in particular an atmosphere which will not cause any unwanted change in quality of the polymeric film during the treatment. It is particularly required to prevent any oxidative reaction by oxygen or air.

Generally, the decomposition treatment is carried out using an inert gas such as nitrogen, argon or helium to create an inert atmosphere, but it may be carried out under vacuum or in an inert medium.

Where the sulphonium salt treatment is performed by heating, the temperature, though variable depending on the type of polymeric sulphonium salt, is generally in the range of 0 to 400°C, preferably 50 to 350°C, more preferably 100 to 300°C.

The conjugated polymer used as electrode-active material in this invention need not necessarily be one which is purely composed of recurring units of a conjugated system. For example, even if sulphur is present in the polymer in an amount not greater than say 7% by weight, preferably not greater than 4% by weight (in terms of analytical value of sulphur in an elementary analysis after heat treatment), such polymer can serve well as a proper electrode material. When sulphur remains partially in the polymer, the polymer can be used as electrode-active material with excellent flexibility.

A reversible electrochemical cell is provided in accordance with the present invention by using the conjugated polymer as electrode-active material, together with an electrolyte. The reversible electrochemical cell is completed by providing suitable circuit components, and is capable of being doped and undoped reversibly in electrochemical technique.

The dopant species employed in polyacetylene and other electrically conductive conjugated polymers can be effectively used for doping and undoping of the reversible electrochemical cell in accordance with this invention. More specifically, anionic dopant species (p-type doping) usable in this invention include anions of halogen compounds such as $PF_6^-$, $SbF_6^-$, $AsF_6^-$, $I^-$, $Br^-$, $Cl^-$, $I_3^-$, $BR_4^-$ and $AlCl_4^-$; anions of perhalogenic acid such as $ClO_4^-$; and other types of anions such as $SO_4^{--}$, $CF_3SO_3^-$, etc. Cationic dopant species (n-type doping) include cations of alkali metals, $Li^+$, $Na^+$, $K^+$ and $Rb^+$; cations of organic compounds, such as cations of formulae:

$$R^5R^6R^7R^8N^+,\ R^5R^6R^7R^8P^+,\ R^5R^6R^7S^+ \text{ or } R^5R^6R^7O^+$$

(where $R^5$ to $R^8$ suitably represent individually an alkyl or arylalkyl group having 1 to 10 carbon atoms, and may be the same or different) and pyridinium cations.

In practice, mixed salts of the anionic and cationic dopant species can be used as electrolyte. Typical examples of such salts are $LiPF_6$, $LiSbF_6$, $LiAsF_6$, $LiClO_4$, NaI, $NaPF_6$, $NaSbF_6$, $NaAsF_6$, $NaClO_4$, KI, $KPF_6$, $KSbF_6$, $KAsF_6$, $KClO_4$, $[(n\text{-}Bu)_4N][AsF_6]$, $[(n\text{-}Bu)_4N][PF_6]$, and $[(n\text{-}Bu)_4N][ClO_4]$. These dopants can be used either individually or in a combination of two or more.

The method for such electrochemical doping is not restrictive. It is possible to employ known methods such as constant-current method, constant-potential method, and methods in which current or potential is not controlled.

The polymeric electrode-active material prepared in the manner described above can be used as an anode or a cathode, or both, to give a reversible electrochemical cell in combination with a proper electrolyte.

The conjugated polymer-electrolyte combinations usable for constituting a reversible electrochemical cell in accordance with this invention include the following examples: conjugated polymer (anionic doping)/electrolyte/conjugated polymer (cationic doping); conjugated polymer (anionic doping)/alkaline metal salt electrolyte/inert metal electrode; conjugated polymer (anionic doping)/alkali metal salt electrolyte/alkali metal or aluminium-alkali metal alloy; conjugated polymer (high-concentration anionic doping)/electrolyte/conjugated polymer (low-concentration anionic doping); and conjugated polymer (high-concentration cationic doping)/electrolyte/conjugated polymer (low-concentration cationic doping). These combinations are merely illustrative and may be replaced by other possible combinations. The electrolyte used in these combinations need not be liquid, provided that it permits the electrochemical migration of the dopant ions. It is possible to use a solid electrolyte, either an inorganic or organic one. Usually, however, the electrolyte is used in a liquid state.

Water or organic solvents can be used as an electrolyte solvent. Although such solvent used in this invention is not limited to any specific type, it is preferred to use a non-protonic organic solvent having a

high dielectric constant. Examples of such organic solvent are propylene carbonate, tetrahydrofuran, 1,2-dimethoxyethane, sulforan, 3-methylsulforan, dichloroethane, γ-butyrolactone, dimethyl sulphoxide, dimethylformamide, dimethylacetamide, acetonitrile and nitromethane. These organic solvents may be used alone or in a combination of two or more. In this invention, the organic solvent is preferably dehydrated before use. Furthermore, the aqueous or organic solvent is preferably subjected to removal of oxygen before use.

As the electrolyte, it is possible to employ the dopant used for the electrochemical doping. The electrolyte concentration in the electrolyte solution is not critical though subject to limitations by the type of the electrolyte and the type of the solvent used. Usually, however, it is preferably in the range of 0.001 to 10 mol/l, more preferably 0.01 to 2 mol/l.

Electrical circuitry for effecting the doping and undoping reversibly in the reversible electrochemical cell may be appropriately arranged according to the purpose. For instance, doping can be first conducted in accordance with voltage application in the electrochemical cell, and then the electrolytic doping is suspended to effect short-circuiting with the counter electrode, or the applied voltage is dropped to a suitable voltage, or a voltage is applied reversely to effect undoping.

It is possible with this method to perform doping and undoping reversibly.

It has also been found that not only is it possible by this method to control the dopant quantity of electrode-active material over a wide range, but also the polyphenylene vinylene polymer electrode-active material exhibits an excellent electrochromism.

As described above, the sulphonium salt used in this invention has excellent shaping characteristics. Hence, the conjugated polymer obtained from the sulphonium salt decomposition treatment can be made in a variety of forms such as film, filament, fabric, etc. Accordingly the electrode-active material of this invention allows a relatively free hand in designing the shape of the electrodes. Further, by providing a composite in which the polymer is secured to a substrate, it is possible to achieve a wide variety of patterns on the shaped electrodes, enabling free designing of display elements. The present invention is thus of immense industrial utility.

The present invention is further illustrated by way of the following non-limiting Examples.

In the Examples reference is made to the accompanying drawings, in which:

Figure 1 is a time-potential characteristic diagram showing the change with time of potential of a dimethoxy-substituted polyphenylene vinylene in the doping-undoping cycles in an electrolyte composed of 1M solution of $LiClO_4$ in propylene carbonate. In the diagram, A, B and C represent the 1st cycle, 8th cycle and 57th cycle, respectively.

Figure 2 is a time-potential characteristic diagram showing the change with time of potential of a dimethoxy-substituted polyphenylene vinylene in the doping-undoping cycles in an electrolyte composed of 0.3M solution of tetra-n-butylammonium perchlorate in acetonitrile. In the diagram, D and E represent the 5th cycle and 7th cycle, respectively.

### Example 1

1.5 g of 2,5-dimethoxy-p-xylylenebisdimethylsulphonium chloride was dissolved in 36 ml of deionized water and cooled to 0°C. This solution was mixed dropwise with 4 ml of a 1N sodium hydroxide solution under nitrogen bubbling and reacted at 0 to 5°C for 20 minutes. The reaction solution was dialyzed by using a dialysis membrane (molecular weight fraction: 8,000), and the dialyzed solution was cast and dried at room temperature. The resulting film of a polymeric sulphonium salt was subjected to heat treatment at 200°C in a stream of nitrogen using a horizontal tubular furnace. In this way, a poly-2,5-dimethoxy-substituted-phenylene vinylene was synthesized. The polymeric sulphonium salt at low temperature had a light yellow colour, and when it was subjected to the heat treatment, dimethyl sulfide was produced as a result of decomposition and the film took a deep red color peculiar to dimethoxy-substituted polyphenylene vinylene. The thus obtained film was cut to a size of 8 mm × 8 mm and bonded with a platinum gauze under pressure to make an electrode. This electrode was placed in a beaker type cell containing as electrolyte a propylene carbonate solution having dissolved therein 1 mol/l of lithium perchlorate and provided with a platinum (10 mm × 20 mm × 0.2 mm) as counter electrode and a Luggin's tube, and the cell was connected to a constant-current power supply. Said dimethoxy-substituted polyphenylene vinylene electrode (hereinafter referred to as said polymer electrode) was arranged to serve as anode while the counter electrode as cathode, and after carrying out doping at 0.1 mA for 15 minutes, the polarity was reversed to conduct undoping at 0.1 mA. The potential of said polymer electrode during this operation was measured as V versus the saturated calomel electrode (hereinafter referred to as SCE) separated by a salt bridge. Said polymer electrode has changed in color from deep red to black in accordance with doping, and the potential increased to 0.9 V vs SCE. The potential began to lower gradually with start of undoping, and a sharp decline took place upon reaching 0.2 V vs SCE, so that the power supply was disconnected. Said polymer electrode did not perfectly restore the original deep red color at this moment. The similar operations were conducted repeatedly. The potential at the end of doping kept on decreasing gradually, reaching 0.8 V vs SCE after the 8th round of doping. The same doping and undoping cycle was further continued while changing certain conditions such as charging time. A typical result of this cycle test is shown in Fig. 1, from which it can be noted that said polymer electrode can be applied as the cathode-active material for secondary cell.

Example 2

A dimethoxy-substituted polyphenylene vinylene electrode (hereinafter referred to as polymer electrode) prepared in the same way as in Example 1 was subjected to the same doping and undoping test as conducted in Example 1 except for use as electrolyte of acetonitrile containing n-tetrabutylammonium perchlorate in a concentration of 0.3 mol/l. First, doping was carried out at 0.1 mA for 10 minutes with said polymer electrode serving as cathode and the counter electrode as anode, and then the polarity was switched to conduct undoping at 0.1 mA. The doping and undoping cycle was repeated ten and odd times while changing certain conditions such as charging time. The result of this cycle test is shown in Fig. 2, which testifies the applicability of said polymer as the anode-active material for secondary cell.

Example 3

Two dimethoxy-substituted polyphenylene vinylene electrodes were prepared in the same way as in Example 1 from the film obtained in Example 2. These two electrodes, with one of them arranged to serve as anode and the other as cathode, were incorporated in a beaker type cell using an acetonitrile electrolyte solution containing 0.3 mol/l of n-tetrabutylammonium perchlorate. The cell was connected to a DC power supply to apply a voltage of 3 V across the electrodes, whereupon a current flow of 0.1—2 mA was observed. When the voltage application was stopped 10 minutes later, the initial open-circuit voltage was found to be 2.6 V while the short-circuit current was 2.2 mA. After continuing short-circuit discharge until the current value became 0.1 mA or below, doping was carried out at 0.1 mA for 10 minutes. The open-circuit voltage after this doping was 2.5 V and the initial short-circuit current was 1.6 mA.

Example 4

8.9 g of p-xylylenebisdiethylsulphonium bromide was dissolved in 200 ml of deionized water and cooled to 0°C. Then a strongly basic ion exchange resin (Amberlite® IRA—401), which had been converted into OH type, was added gradually over a period of 10 minutes in an amount equivalent to twice the amount of sulphonium salt, followed by stirring of the mixture at 0—5°C for 2 hours. After the reaction, the ion exchange resin was removed by filtration, and the reaction solution was dialyzed for 2 days by using a dialysis membrane (molecular weight fraction: 8,000). The thus treated solution was cast and dried under reduced pressure at a temperature not exceeding 35°C to obtain a 7 μ thick polymeric sulphonium salt film of light greenish yellow having sulphonium salt as side chain. This film was subjected to a 30-minutes heat treatment at 300°C under a nitrogen atmosphere by using a horizontal tubular furnace. The elementary analysis of the film showed 90.5% of carbon, 6.1% of hydrogen and 3.5% of sulfur, which indicated that the film composition was not made into a perfect conjugated polymer, but the film had excellent flexibility.

The thus obtained film was cut to a size of 10 mm × 10 mm and bonded with a platinum gauze under pressure to make an electrode. This electrode and a dimethoxy-substituted polyphenylene vinylene electrode similar to the one used in Example 1 were set in a beaker type cell using acetonitrile containing 0.3 mol/l of tetra-n-butylammonium perchlorate as electrolyte solution. With the former electrode arranged to serve as anode and the latter electrode as cathode, the cell was charged at 0.1 mA for 10 minutes. As a result, both electrodes were changed into a black color and the cell showed a voltage of 3.2 V. When the power supply was disconnected, the initial open-circuit voltage was 3.0 V and the initial short-circuit current was 2.8 mA. After continuing short-circuit discharge until the current value became 0.1 mA or less, a voltage of 3.3 V was applied for 10 minutes. The current value decreased gradually from 1 mA to 0.11 mA after ten minutes. The open circuit voltage after this period was 3.0 V and the short-circuit current was 2.7 mA.

Example 5

In a dry box, an electrode made by cutting the dimethoxy-substituted polyphenylene vinylene film obtained in Example 2 to a size of 13 mm × 13 mm and bonding it under pressure with a platinum gauze and another electrode made by bonding a lithium sheet (7 mm × 7 mm × 0.2 mm) with a platinum gauze were set in opposition to each other by placing therebetween as spacer a filter paper impregnated with a propylene carbonate solution containing 1 mol/l of lithium perchlorate. The platinum wire was extended out to serve as lead, and other portion was wrapped up with Aclar C—22 (a trifluorochloroethylene film mfd. by Allied Corporation) and heat sealed to make a paper type cell. This cell was connected to a DC power supply, with the dimethoxy-substituted polyphenylene vinylene electrode connected to the positive (+) side and the lithium electrode to the negative (−) side, and charged at 0.1 mA for 10 minutes. The open-circuit voltage after charging was 3.7 V and the initial short-circuit current was 7 mA. After the measurement, the cell was discharged at 0.1 mA until the cell voltage became 3.0 V. Thereafter, the charging and discharging cycle was repeated several times at 0.1 mA. The open-circuit voltage after final charging was 3.7 V and the initial short-circuit current was 20 mA.

Example 5

P-xylylenebis(diethylsulphonium bromide) was subjected to condensation polymerization in water by using sodium hydroxide, and then the solution was neutralized by using an aqueous solution of hydrogen bromide to stop the polymerization. This reaction solution was dialyzed with a dialysis membrane having a fractional molecular weight of 3,500. The thus prepared aqueous solution of polymeric sulfonium salt was

coated on Nesa glass (transparent electrode) by screen printing technique and then subjected to a drying heat treatment in a nitrogen gas stream to obtain an electrode-active material. The conjugated polymer film on the electrode surface took an orange color and had a thickness of about 1 μ.

Said electrode-active material was incorporated in a beaker type cell using as electrolyte an anhydrous acetonitrile solution containing 0.1 mol/l of lithium perchlorate and provided with platinum wire as counter electrode. When a voltage of 5 V was applied to this cell with said electrode-active material serving as anode and the platinum electrode as cathode, the electrode-active material was instantaneously changed into black. Then the voltage was cut off, but the electrode-active material remained unchanged in color (maintained black color) and had the memory function. When a voltage of 5 V was applied again but reversely 10 minutes thereafter, undoping took place and the color was instantaneously changed into organe. The similar operations were repeated ten times, in which there took place alternative color change from orange to black and from black to orange, and the electrode-active material exhibited electrochromic characteristics.

Example 6

The procedure of Example 5 was repeated except the use of 2,5-dimethyl-p-xylylenebis(diethylsulphonium bromide) in place of p-xylylenebis(diethylsulphonium bromide). The obtained electrode-active material took a light-orange color, and the conjugated polymer film on Nesa glass had a thickness of 0.8 μ. This electrode-active material showed a color change from light-orange to black upon application of 5 V to a cell incorporated with said electrode-active material in an acetonitrile solution of lithium perchlorate and having platinum wire as counter electrode. When the voltage was applied reversely, undoping occurred and the color returned to light orange.

Example 7

Example 5 was repeated except the use of 2,5-dimethoxy-p-xylylene-bis(diethylsulfonium bromide) in place of p-xylylenebis(diethylsulphonium bromide). The obtained electrode-active material was red in color and the conjugated polymer film on Nesa glass had a thickness of 0.7 μ.

In a cell incorporated with said electrode-active material in an acetonitrile solution of lithium perchlorate and having platinum wire as counter electrode, said electrode-active material was changed in color from red to black upon application of 5 V, and the color returned to red upon reverse voltage application.

**Claims**

1. A process of fabricating an electrochromic display element comprising a reversible electrochemical cell having as electrode-active material, serving as colour former, a polyphenylene vinylene polymer comprising a conjugated polymeric structure of the formula:

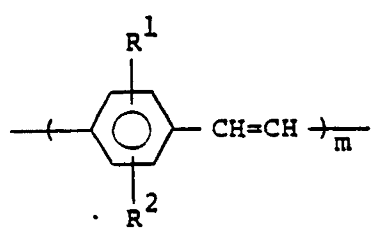

(wherein $R^1$ and $R^2$ represent independently hydrogen, an alkyl group or an alkoxy group, and *m* is an integer of 2 or more); which process comprises first forming into a desired shape a polymeric sulphonium salt having the structure represented by the general formula:

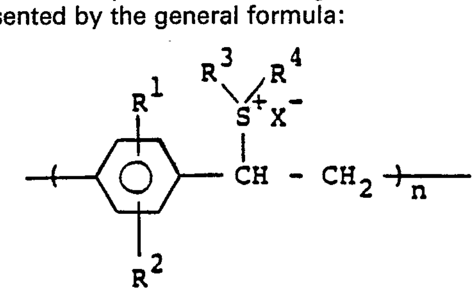

(wherein $R^1$ and $R^2$ are as defined above, $R^3$ and $R^4$ represent independently a hydrocarbon group having 1 to 20 carbon atoms, X is a counter ion, and *n* is defined by the relationship $n \geq m \geq 2$); subjecting the shaped polymeric sulphonium salt to decomposition treatment in an inert atmosphere to form the polyphenylene vinylene polymer; and placing the electrode-active material in the cell together with an electrolyte.

2. A process according to claim 1, wherein the conjugated polymeric structure is a poly-p-phenylene-vinylene, poly-2,5-dialkyl-p-phenylenevinylene or poly-2,5-dialkoxy-p-phenylenevinylene.

3. A process according to claim 2, wherein the alkyl or alkoxy substituents have 1 to 5 carbon atoms.

4. A process according to claim 2, wherein the alkyl or alkoxy substituent is a method, ethyl, methoxy or ethoxy group.

5. A process of fabricating a reversible electrochemical cell using as electrode-active material a polyphenylene vinylene polymer comprising a conjugated structure of the formula:

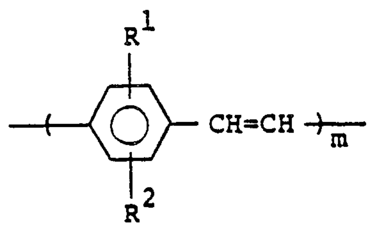

(wherein $R^1$ represents hydrogen or an alkoxy group, $R^2$ represents an alkoxy group, and *m* is an integer of 2 or more); which process comprises first forming, into a desired shape, a polymeric sulphonium salt having the structure represented by the general formula:

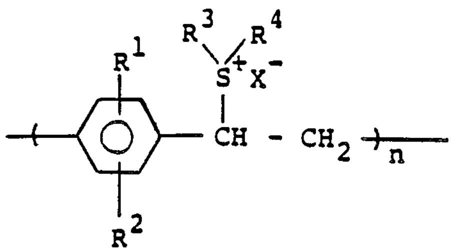

(wherein $R^1$ and $R^2$ are as defined above, $R^3$ and $R^4$ represent independently a hydrocarbon group having 1 to 20 carbon atoms, X is a counter ion, and *n* is defined by the relationship $n \geq m \geq 2$); subjecting the shaped polymeric sulphonium salt to decomposition treatment in an inert atmosphere to form the polyphenylene vinylene polymer; and placing the electrode-active material in the cell together with an electrolyte.

6. A process according to claim 5, wherein the conjugated polymeric structure is a poly-2,5-dialkoxy-p-phenylenevinylene.

7. A process according to claim 6, wherein the alkoxy substituents have 1 to 5 carbon atoms.

8. A process according to claim 6, wherein the alkoxy substituent is a methoxy or ethoxy group.

**Patentansprüche**

1. Verfahren zur Herstellung einer elektrochromen Anzeigevorrichtung mit einer reversiblen elektrochemischen Zelle, die als als Farbbildner dienendes elektrodenaktives Material in Polyphenylenvinylenpolymerisat mit konjugierter Polymerstruktur der Formel:

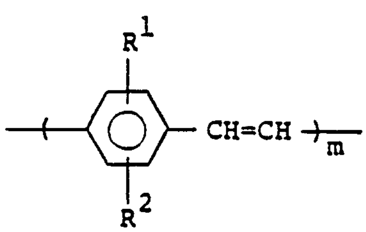

(worin $R^1$ und $R^2$ unabhängig voneinander Wasserstoff, eine Alkylgruppe oder eine Alkoxygruppe darstellen und m für eine ganze Zahl von 2 oder mehr steht), gekennzeichnet durch Ausformen eines polymeren Sulfoniumsalzes einer durch die allgemeine Formel:

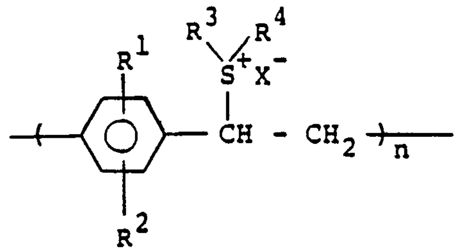

dargestellten Struktur (worin $R^1$ und $R^2$ die angegebene Bedeutung besitzen, $R^3$ und $R^4$ unabhängig voneinander eine Kohlenwasserstoffgruppe mit 1 bis 20 Kohlenstoffatom(en) darstellen, X für ein Gegenion steht und n durch die Beziehung $n \geq m \geq 2$ definiert ist) zu der gewünschten Form; Zersetzungsbehandlung des ausgeformten polymeren Sulfoniumsalzes in einer inerten Atmosphäre zur Bildung des Polyphenylenvinylenpolymerisats und Einbringen des elektrodenaktiven Materials zusammen mit einem Elektrolyten in die Zelle.

2. Verfahren nach Anspruch 1, dadurch gekennzeichnet, daß es sich bei der konjugierten Polymerstruktur um eine Poly-p-phenylenvinylen, Poly-2,5-dialkyl-p-phenylenvinylen oder Poly-2,5-dialkoxy-p-phenylenvinylen handelt.

3. Verfahren nach Anspruch 2, dadurch gekennzeichnet, daß die Alkyl- oder Alkoxysubstituenten 1 bis 5 Kohlenstoffatom(e) enthalten.

4. Verfahren nach Anspruch 2, dadurch gekennzeichnet, daß es sich bei dem Alkyl- oder Alkoxysubstituenten um eine Methyl-, Ethyl-, Methoxy- oder Ethoxygruppe handelt.

5. Verfahren zur Herstellung einer reversiblen elektrochemischen Zelle unter Verwendung eines Polyphenylenvinylenpolymerisats mit einer konjugierten Struktur der Formel:

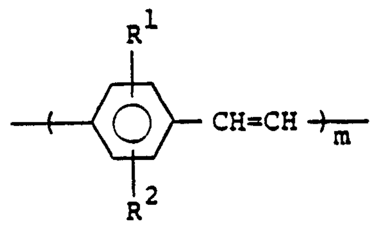

(worin $R^1$ Wasserstoff oder eine Alkoxygruppe und $R^2$ eine Alkoxygruppe darstellen und m für eine ganze Zahl von 2 oder mehr steht), gekennzeichnet durch: Ausformen eines polymeren Sulfoniumsalzes einer durch die allgemeine Formel:

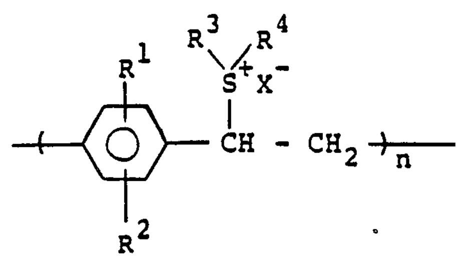

dargestellten Struktur (worin $R^1$ und $R^2$ die angegebene Bedeutung besitzen, $R^3$ und $R^4$ unabhängig voneinander eine Kohlenwasserstoffgruppe mit 1 bis 20 Kohlenstoffatom(en) darstellen, X für ein Gegenion steht und n durch die Beziehung $n \geq m \geq 2$ definiert ist) zu der gewünschten Form; Zersetzungsbehandlung des ausgeformten polymeren Sulfoniumsalzes in einer inerten Atmosphäre zur Bildung des Polyphenylenvinylenpolymerisats und Einbringen des elektrodenaktiven Materials zusammen mit einem Elektrolyten in die Zelle.

6. Verfahren nach Anspruch 5, dadurch gekennzeichnet, daß es sich bei der konjugierten Polymerstruktur um Poly-2,5-dialkoxy-p-phenylenvinylen handelt.

7. Verfahren nach Anspruch 6, dadurch gekennzeichnet, daß die Alkoxysubstituenten 1 bis 5 Kohlenstoffatom(e) aufweisen.

8. Verfahren nach Anspruch 6, dadurch gekennzeichnet, daß es sich bei dem Alkoxysubstituenten um eine Methoxy- oder Ethoxygruppe handelt.

**Revendications**

1. Procédé de fabrication d'un élément d'affichage électrochromique comprenant une cellule électrochimique réversible ayant comme matériau actif en tant qu'électrodes, servant de générateur de couleur, un polymère poly(phénylènevinylène) comprenant une structure polymère conjuguée de formule

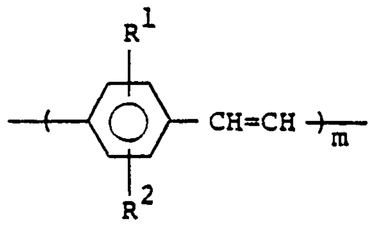

(dans laquelle $R^1$ et $R^2$ représentent indépendamment des atomes d'hydrogène ou des groupements alkyle ou alcoxy et m est un entier de 2 ou plus); procédé qui consiste d'abord à façonner à la forme désirée un sel de sulfonium polymère ayant la structure représentée par la formule générale

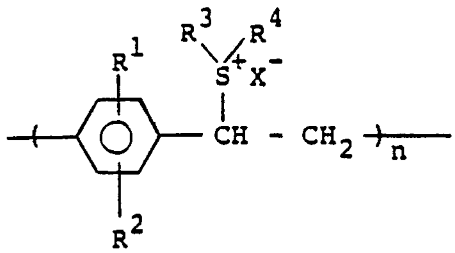

(dans laquelle $R^1$ et $R^2$ sont tels que définis ci-dessus, $R^3$ et $R^4$ représentent indépendamment des groupements hydrocarbonés ayant de 1 à 20 atomes de carbone, X est un ion de charge opposée, et n est défini par la relation $n \geqslant m \geqslant 2$); à soumettre le sel de sulfonium polymère façonné à un traitement de décomposition sous atmosphère inerte pour former le polymère poly(phénylènevinylène); et à placer le matériau actif en tant qu'électrode dans la cellule avec un électrolyte.

2. Procédé selon la revendication 1, dans lequel la structure polymère conjuguée est un poly(p-phénylènevinylène), un poly(2,5-dialkyl-p-phénylènevinylène) ou un poly(2,5-dialcoxy-p-phénylènevinylène).

3. Procédé selon la revendication 2, dans lequel les substituants alkyle ou alcoxy ont de 1 à 5 atomes de carbone.

4. Procédé selon la revendication 2, dans lequel le substituant alkyle ou alcoxy est un groupement méthyle, éthyle, méthoxy ou éthoxy.

5. Procédé de fabrication d'une cellule électrochimique reversible utilisant comme matériau actif en tant qu'électrode un polymère poly(phénylènevinylène) comprenant une structure polymère conjuguée de formule

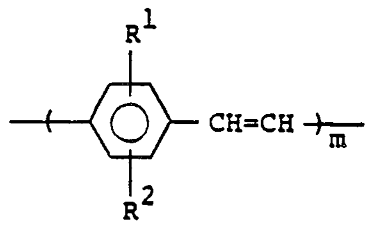

(dans laquelle $R^1$ représente un atome d'hydrogène ou un groupement alcoxy, $R^2$ représente un groupement alcoxy et m est un entier de 2 ou plus); procédé qui consiste d'abord à façonner à la forme désirée un sel de sulfonium polymère ayant la structure représentée par la formule générale

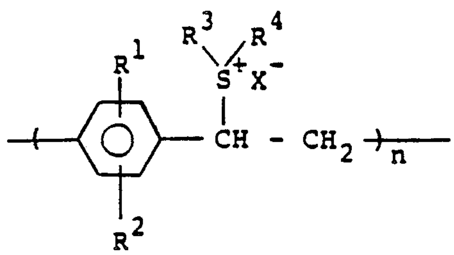

(dans laquelle $R^1$ et $R^2$ sont tels que définis ci-dessus, $R^3$ et $R^4$ représentent indépendamment des groupements hydrocarbonés ayant de 1 à 20 atomes de carbone, X est un ion de charge opposée, et n est défini par la relation $n \geqslant m \geqslant 2$); à soumettre le sel de sulfonium polymère façonné à un traitement de décomposition sous atmosphère inerte pour former le polymèr poly(phénylènevinylène); et à placer le matériau actif en tant qu'électrode dans la cellule avec un électrolyte.

6. Procédé selon la revendication 5, dans lequel la structure polymère conjuguée est un poly(2,5-dialcoxy-p-phénylènevinylène).

7. Procédé selon la revendication 6, dans lequel les substituants alcoxy ont de 1 à 5 atomes de carbone.

8. Procédé selon la revendication 6, dans lequel le substituant alcoxy est un groupement méthoxy ou éthoxy.

FIG. 1

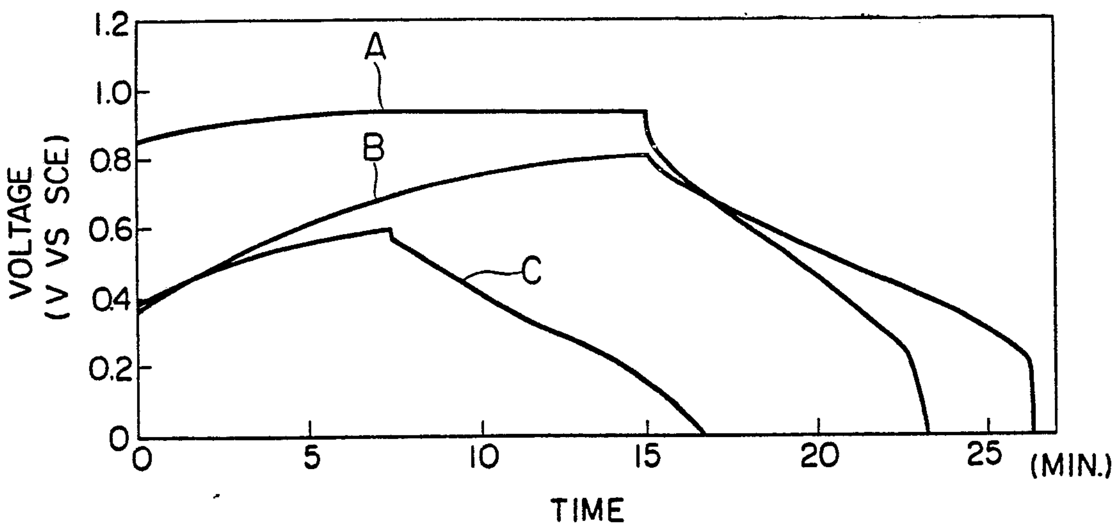
1.2
1.0
0.8
0.6
0.4
0.2
0
VOLTAGE (V VS SCE)
A
B
C
0
5
10
15
20
25
(MIN.)
TIME

FIG. 2

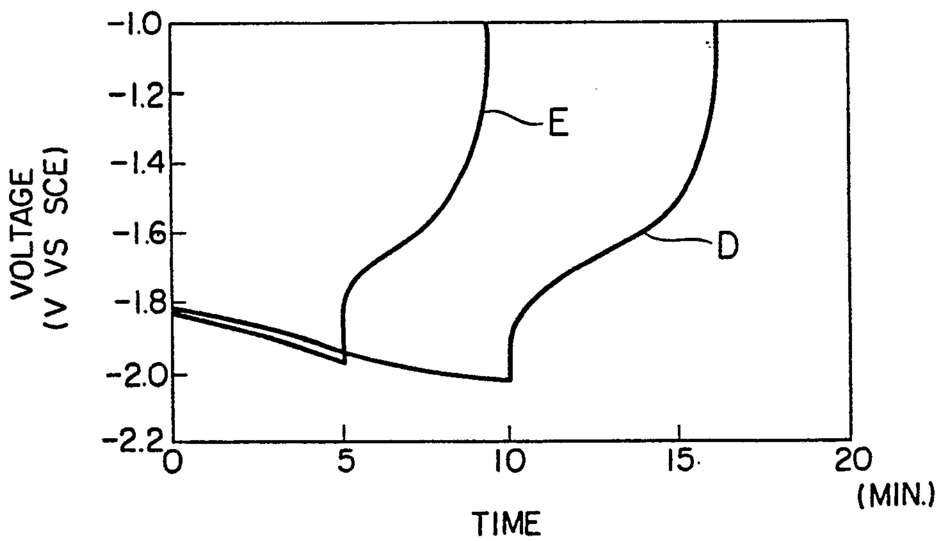
-1.0
-1.2
-1.4
-1.6
-1.8
-2.0
-2.2
VOLTAGE (V VS SCE)
E
D
0
5
10
15
20
(MIN.)
TIME